# EUROPÄISCHE PATENTSCHRIFT

(11) **EP 0 862 964 B1**
(45) Veröffentlichungstag und Bekanntmachung des Hinweises auf die Patenterteilung: **08.01.2003**
(21) Anmeldenummer: 98103740.1
(22) Anmeldetag: 03.03.1998
(51) Int. Cl.: B23K 9/20, B23K 35/02

(54) **Schweissbolzen**
Welding stud
Plot de contact

(30) Priorität: 04.03.1997 DE 29703946 U
(43) Veröffentlichungstag der Anmeldung: 09.09.1998
(73) Patentinhaber: HBS Bolzenschweisssysteme GmbH & Co. KG, 85221 Dachau (DE)
(72) Erfinder: Susgin, Detlef, 82014 Taufkirchen (DE)
(74) Vertreter: Strehl Schübel-Hopf & Partner

(56) Entgegenhaltungen:
- GB-A- 907 600
- US-A- 3 905 173

## Beschreibung

Zur Wärme- und Schallisolierung von Heiz- und Lüftungskanälen und ähnlich auch für andere Isolierzwecke werden Isoliermatten eingesetzt, die im häufig aus Steinwolle oder einem ähnlichen Isoliermaterial bestehen und zum Schutz gegen eindringenden Wasserdampf sowie zur Erhöhung der mechanischen Festigkeit und der Isolierwirkung an ihrer Außenfläche mit einer Aluminiumfolie beschichtet sind.

Derartige Isoliermatten werden an dem jeweiligen metallischen Werkstück, beispielsweise einem aus verzinktem Blech hergestellten Luftkanal, durch Schweißbolzen mit Tellerkopf angebracht.

Der Schweißbolzen wird dazu mit der Spitze seines Schafts durch die Aluminiumfolie und die Isoliermatte hindurch gestochen, bis er das metallische Werkstück berührt. Durch Stromzuführung mittels eines an der Außenfläche des Schweißbolzen-Tellerkopfes angesetzten Stromübergangsstücks einer Schweißpistole wird zwischen der Bolzenspitze und dem Werkstück ein Lichtbogen gezündet, der die Bolzenspitze zum Schmelzen bringt; gleichzeitig wird der Schweißbolzen mittels der Pistole gegen das Werkstück gedrückt, so daß die Verschweißung zustande kommt.

Die Schaftlänge des Schweißbolzens ist in der Regel so gewählt, daß im fertig angeschweißtem Zustand der Tellerkopf des Schweißbolzens die Isoliermatte nicht nur berührt, sondern um ein gewisses Maß zusammendrückt.

Es ist wichtig, mindestens während des Schweißvorgangs einen elektrischen Stromübergang zwischen dem metallischen Schweißbolzen und der Aluminiumfolie der Isoliermatte zu verhindern. Geschieht dies nicht, so kommt es zu einem Verdampfen der Aluminiumfolie im Bereich des Schweißbolzen. Ferner kann ein erheblicher Teil des Schweißstroms über die Aluminiumfolie und einen oder mehrere bereits vorher angeschweißte Bolzen zum Werkstück abfließen, so daß der durch den anzuschweißenden Bolzen fließende Strom für eine ordnungsgemäße Verschweißung möglicherweise nicht mehr ausreicht.

Zur Vermeidung dieses Problems sind Schweißbolzen mit Tellerkopf auf dem Markt, bei denen sowohl die Unterseite des Tellerkopfes als auch die Außenfläche des Schafts isoliert sind. Ein derartiger Schweißbolzen ist in der Firmenschrift "AGM Stud Welder Instruction Manual Model 600SS" der Firma AGM Industries, Inc., Canton, MA 02021, U.S.A., veröffentlicht 5-91, Kapitel APP SH 250C-10, beschrieben

Eine andere aus DE-A-4 312 181 bekannte Lösung besteht darin, die Isoliermatte mit der Aluminiumfolie während des Verschweißens durch einen Niederhalter in Abstand vom Tellerkopf zu halten. Dabei braucht nur der Bolzenschaft isoliert zu sein, und zwar nur in dem Bereich, in dem sich die Aluminiumfolie im niedergehaltenen Zustand während des Schweißvorgangs befindet. Die in beiden Fällen erforderliche Isolierung am Bolzenschaft, die beispielsweise in einem auf dem Schaft aufgeschobenen oder aufgeschrumpften Stück Isolierschlauch besteht, stellt allerdings eine zusätzliche Fertigungsmaßnahme mit entsprechendem Kostenaufwand dar.

Der Erfindung liegt die Aufgabe zugrunde, einen zum Befestigen einer metallkaschierten Isoliermatte geeigneten Schweißbolzen anzugeben, der das geschilderte Kurzschlußproblem ohne Schaftisolierung vermeidet.

Die Lösung dieser Aufgabe gelingt mit dem in Anspruch 1 gekennzeichneten Schweißbolzen.

Die danach vorgesehene Ausformung des an seiner Unterseite isolierten Tellerkopfes in dem den Bolzenschaft umgebenden Bereich hat zweierlei Funktion: Zum einen bildet sie eine isolierte Verlängerung des Schafts über dessen hinteres Ende hinaus; zum anderen hat die Ausformung, da sie den Schaft umgibt, einen größeren Durchmesser als dieser und führt beim Eindrücken des Schweißbolzens in die Isoliermatte dazu, daß sie das in der Aluminiumfolie und dem darunter liegenden Bereich der Isoliermatte beim ersten Einstechen gebildete Loch erweitert und dadurch die Aluminiumfolie vom eigentlichen, nicht-isolierten Schaft wegdrückt.

Die in den Ansprüchen 2 bis 5 angegebene konische oder sich verjüngende gewölbte Gestaltung der am Tellerkopf vorgesehenen Ausformung bewirkt noch sicherer, daß das Durchgangsloch in Folie und Isoliermatte groß gemacht und die Aluminiumfolie auf Abstand vom Bolzenschaft gehalten wird.

Die Maßnahme des Anspruchs 6 hat den Sinn, Kontakt zwischen dem Außenrand des Tellerkopfes und der Aluminiumfolie auch dann zuverlässig zu verhindern, wenn der Tellerkopf aus vorbeschichtetem Blech ausgestanzt ist.

Ansprüche 7 und 8 beziehen sich auf verschiedene Möglichkeiten, die Isolierung an der Unterseite des Tellerkopfes vorzusehen.

Ausführungsbeispiele der Erfindung werden nachstehend anhand der Zeichnung näher erläutert, deren
- Figur 1: einen Längsschnitt durch einen Schweißbolzen zeigt, der mit seinem Schaft durch eine Isoliermatte hindurchgedrückt wurde und sich in der zum Anschweißen bereiten Stellung befindet, während
- Figur 2: einen Schweißbolzen gemäß einer Variante darstellt.

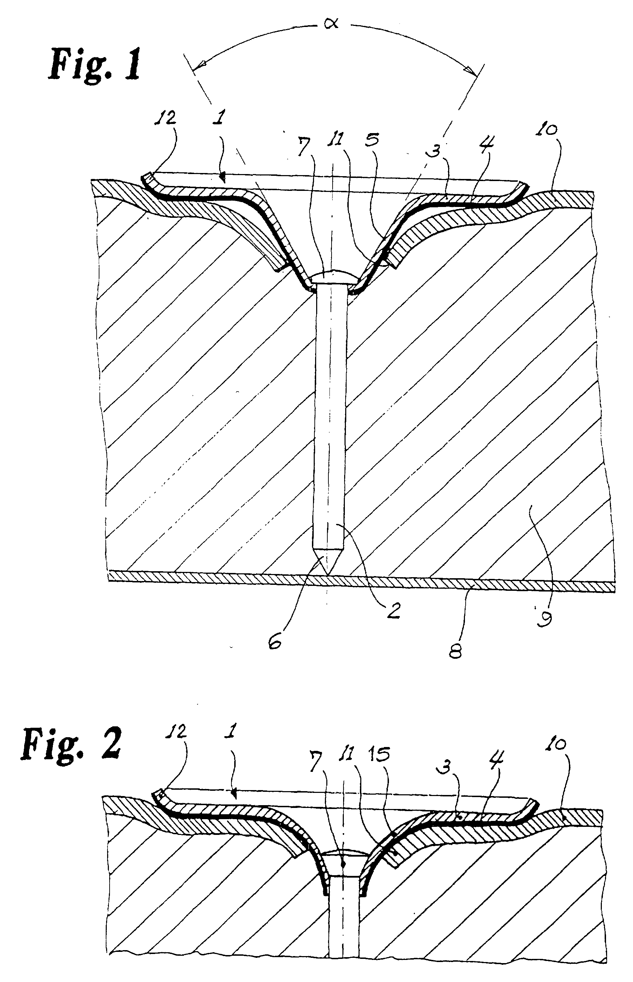

Gemäß Figur 1 besteht der Schweißbolzen aus einem Tellerkopf **1** und einem Schaft **2.** Der Tellerkopf **1** ist eine aus verzinktem, schweißbarem Stahlblech ausgestanzte Scheibe **3,** die an ihrer einen Fläche (gemäß Figur 1 an der Unterseite) mit einer Isolierschicht **4** versehen ist.

Die Scheibe **3** weist eine mittige, nach unten vorspringende, konische Ausformung **5** auf, die zentrisch von dem Schaft **2** durchsetzt wird. Die Ausformung **5** ist somit in Richtung des Schafts **2** (in Figur 1 nach unten) konvex.

Der Schaft **2** ist insgesamt nagelförmig gestaltet; er weist an seinem unteren Ende eine Spitze **6** und an seinem oberen Ende einen Nagelkopf **7** auf, der sich innerhalb der Ausformung **5** befindet und verhindert, daß sich der Tellerkopf **1** unter der Wirkung einer nach oben gerichteten Kraft vom Schaft **2** löst.

Mit **8** ist in Figur 1 ein metallisches Werkstück bezeichnet, bei dem es sich beispielsweise um eine Wand eines Luftkanals handelt, an dem eine Isoliermatte **9** befestigt werden soll. Die beispielsweise aus Steinwolle bestehende Isoliermatte **9** ist an ihrer in Figur 1 oberen Fläche mit einer Aluminiumfolie **10** kaschiert. Im Ausgangszustand hat die Isoliermatte **9** durchgehend gleiche Dicke, und die Aluminiumfolie **10** verläuft im wesentlichen parallel zur Oberfläche des Werkstücks **8**.

Zum Befestigen wird der Schweißbolzen mit seiner Spitze **6** durch die Aluminiumfolie **10** und die Isoliermatte **9** hindurchgedrückt, bis seine Spitze **6** das Werkstück **8** berührt. Dieser Zustand ist in Figur 1 dargestellt.

Wie ersichtlich, bewirkt bei diesem Einstechvorgang die den Bolzenschaft **2** nach hinten verlängernde konische Ausformung **5** des Tellerkopfes **1**, daß das vom Schaft **2** in der Aluminiumfolie **10** und der Isoliermatte **9** erzeugte Loch, das zunächst nur den Durchmesser des Schafts **2** hat, erweitert wird, wobei sich der Lochrand **11** der Aluminiumfolie **10** vom Bolzenschaft **2** zurückzieht. Die Folie **10** steht dann nur noch mit der an der Unterseite des Tellerkopfes **1** und der Ausformung **5** vorhandenen Isolierschicht **4**, nicht aber mit dem unisolierten Bolzenschaft **2**, in Berührung.

Die Isolierschicht **4** kann aus einer Kunststoffbeschichtung, beispielsweise einem Isolierlack, bestehen, mit dem das Blechmaterial vor dem Ausstanzen der einzelnen Tellerköpfe überzogen wurde. Um in diesem Fall Kontakt zwischen der Außenkante des Tellerkopfes **1** und der Außenseite der Aluminiumfolie **10** auch dann mit Sicherheit zu vermeiden, wenn der Schweißbolzen so bemessen ist, daß er verhältnismäßig tief in die Isoliermatte hineingedrückt wird, ist der Außenrand **12** des Tellerkopfes **1** nach oben aufgebogen.

Eine andere Möglichkeit der Isolierung des Tellerkopfes besteht darin, diesen nach seiner Verformung mit einem isolierenden Überzug, etwa einem isolierenden Farbauftrag, zu versehen. Grundsätzlich möglich ist es auch, eine separate Scheibe aus Isoliermaterial auf den Schweißbolzen aufzuschieben, die im fertigen Zustand zwischen der metallischen Scheibe **3** des Tellerkopfes **1** und der Aluminiumfolie **10** zu liegen kommt. Eine derartige separat gefertigte Isolierlage kann einen etwas größeren Durchmesser haben als die Metallscheibe **3** des Bolzenkopfes, so daß auf eine Aufbiegung des Außenrandes des Tellerkopfes **1** verzichtet werden kann.

In dem obigen Ausführungsbeispiel ist die Ausformung **5** konisch dargestellt. Um zu gewährleisten, daß das im oberen Bereich der Isoliermatte **9** und in der Aluminiumfolie **10** gebildete Loch genügend erweitert wird, ohne jedoch dem Widerstand beim Eindrücken des Schweißbolzens auch bei dichteren Materialien der Isoliermatte **9** übermäßig zu erhöhen, ist ein Konuswinkel α von höchstens etwa 120°, vorzugsweise kleiner als etwa 90°, zweckmäßig.

Die Gestaltung nach Figur 2 unterscheidet sich von der nach Figur 1 darin, daß die Ausformung **15** nicht konisch gestaltet sondern gewölbt ist und sich zum Schaft **2** hin verjüngt. Idealerweise beginnt sie dort mit einem Winkel von 0°. Bei dieser Form ist die gewünschte Erweiterung des in der Aluminiumfolie **10** gebildeten Lochs auch bei widerstandsfähigen und zähen Werkstoffen gewährleistet.

## Patentansprüche

1. Schweißbolzen mit einem Schaft (**2**) und einem an seiner Unterseite isolierten Tellerkopf (**1**), **dadurch gekennzeichnet, daß** der Tellerkopf (**1**) eine den Schaft (**2**) umgebende, zur Unterseite des Tellerkopfes hin konvexe Ausformung (**5**) aufweist.

2. Schweißbolzen nach Anspruch 1, **dadurch gekennzeichnet, daß** die Ausformung (**5**) konisch ist.

3. Schweißbolzen nach Anspruch 2, **dadurch gekennzeichnet, daß** der Konuswinkel höchstens 120° beträgt, vorzugsweise kleiner als 90° ist.

4. Schweißbolzen nach Anspruch 1, **dadurch gekennzeichnet, daß** sich die Ausformung (**15**) in Richtung des Schafts (**2**) gewölbt verjüngt.

5. Schweißbolzen nach Anspruch 4, **dadurch gekennzeichnet, daß** der die Ausformung (**15**) am Schaft (**2**) mit einem Winkel von im wesentlichen 0° beginnt.

6. Schweißbolzen nach einem der Ansprüche 1 bis 5, **dadurch gekennzeichnet, daß** der Außenrand (**12**) des Tellerkopfes (**1**) nach oben aufgebogen ist.

7. Schweißbolzen nach einem der Ansprüche 1 bis 6, **dadurch gekennzeichnet, daß** der Tellerkopf (**1**) aus isolierend beschichtetem Blech hergestellt ist.

8. Schweißbolzen nach einem der Ansprüche 1 bis 6, **dadurch gekennzeichnet, daß** die Isolierung aus einer Isolierschicht (**4**) besteht, die auf eine den Tellerkopf bildende, verformte Metallscheibe (**3**) aufgetragen ist.

## Claims

1. A welding stud having a shaft (2) and a disk head (1) insulated at its lower side, **characterised in that** the disk head (1) has a shaped portion (5) which surrounds the shaft (2) and is convex with respect to the lower side of the disk head.

2. The welding stud of claim 1, **characterised in that** the shaped portion (5) is conical.

3. The welding stud of claim 2, **characterised in that** the cone angle is at most 120°, preferably smaller than 90°.

4. The welding stud of claim 1, **characterised in that** the shaped portion (15) tapers toward the shaft (2) in a curved manner.

5. The welding stud of claim 4, **characterised in that** the shaped portion (15) starts at the shaft (2) at an angle of substantially 0°.

6. The welding stud of any one of claims 1 to 5, **characterised in that** the outer edge (12) of the disk head (1) is bent upwardly.

7. The welding stud of any one of claims 1 to 6, **characterised in that** the disk head (1) is made of sheet metal having an insulating coating.

8. The welding stud of any one of claims 1 to 6, **characterised in that** the insulation consists of an insulating layer (4) applied on a shaped metal disk (3) constituting the disk head.

## Revendications

1. Goujon à souder comportant une tige (2) et une tête à plateau (1) isolée sur sa face inférieure, **caractérisé en ce que** la tête à plateau (1) présente une déformation qui entoure la tige (2) et qui est convexe vers la face inférieure de la tête à plateau.

2. Goujon à souder selon la revendication 1, **caractérisé en ce que** la déformation (5) est conique.

3. Goujon à souder selon la revendication 2, **caractérisé en ce que** l'angle de cône est au maximum de 120°, de préférence inférieur à 90°.

4. Goujon à souder selon la revendication 1, **caractérisé en ce que** la déformation (15) se rétrécit de manière bombée dans la direction de la tige (2).

5. Goujon à souder selon la revendication 4, **caractérisé en ce que** la déformation (15) commence sur la tige (2) avec un angle sensiblement de 0°.

6. Goujon à souder selon l'une des revendications 1 à 5, **caractérisé en ce que** le bord extérieur (12) de la tête à plateau (1) est replié vers le haut.

7. Goujon à souder selon l'une des revendications 1 à 6, **caractérisé en ce que** la tête à plateau (1) est réalisée dans une tôle à revêtement isolant.

8. Goujon à souder selon l'une des revendications 1 à 6, **caractérisé en ce que** l'isolation est constituée d'une couche isolante (4) qui est appliquée sur un disque métallique (3) déformé, formant la tête à plateau.
